# EUROPEAN PATENT APPLICATION

(11) **EP 1 705 597 A2**
(43) Date of publication of application: **27.09.2006**
(21) Application number: 06250700.9
(22) Date of filing: 09.02.2006
(51) Int. Cl.: G06F 21/00

(54) **Authentication system, method of controlling the authentication system, and portable authentication apparatus**

(30) Priority: 25.03.2005 JP 2005088778
(71) Applicant: FUJITSU LIMITED, Kawasaki-shi, Kanagawa 211-8588 (JP)
(72) Inventor: Sato, Yuichi, Kawasaki-shi, Kanagawa 211-8588 (JP); Senta, Yosuke, Kawasaki-shi, Kanagawa 211-8588 (JP); Kobayashi, Hiroki, Kawasaki-shi, Kanagawa 211-8588 (JP); Kanou, Ryouhei, Shinagawa-ku Tokyo 141-8581 (JP); Tanaka, Toru, Nishitokyo-shi, Tokyo 188-8511 (JP); Kawashima, Takeaki, Nishitokyo-shi, Tokyo 188-8511 (JP)
(74) Representative: Stebbing, Timothy Charles

(57) **Abstract**

A personal-identification-information transmitting unit transmits personal identification information. A portable authentication apparatus (10) receives the personal identification information, and performs an authentication process based on the personal identification information received and personal identification information (12a) stored in the portable authentication apparatus in advance. The portable authentication apparatus (10) includes a control unit (11) that controls provision of at least one of predetermined data (12a) and software (12b) to the information processing apparatus, based on a result of the authentication process. The portable authentication apparatus may take the form of a memory stick for insertion into a socket of a PC, and having a wireless link with the transmitting unit.

## Description

The present invention relates to a technology for authenticating a user who operates an information processing apparatus, with easy portability and easy application to a personal computer (PC) that is shared by a plurality of users.

Conventionally, a technique is known, which uses a card such as an employee identification card for identifying an individual, and an authentication apparatus connected to a PC to permit an operation of the PC only when an authentication process is successful.

For example, Japanese Patent Application Laid-open No. 2004-246720 discloses a technique relating to a universal serial bus (USB) token, in which a program such as groupware requiring personal authentication is stored in advance, to construct a work environment for each individual on the connected PC.

A technique, in which wireless communication is performed between a card carried by a user and an authentication apparatus connected to a PC, and when the user is away from the authentication apparatus by a predetermined distance, the operation of the PC is prohibited so as to prevent information leakage to other users, is disclosed in SuperWave Corporation, "PC Lock", Online, Searched on March 9th, 2005, Internet <URL:http://www.superwave.co.jp/data/sws100.pdf>.

However, the USB token disclosed in the former literature has a problem in that when a user who has developed a personal work environment on the PC is away from the PC, other users can see the work environment, thereby allowing information leakage whilst the user is away from his seat. Particularly, when the PC is shared by a plurality of users, the risk of information leakage may further increase.

Therefore, it can be considered to use the authentication apparatus disclosed in the latter literature together with the USB token disclosed in the former literature. Such an authentication apparatus, however, has a problem in that the apparatus is too large to carry, when the user moves between PCs installed in different places during work. Therefore, the authentication apparatus is not suitable for such an application that it is necessary to lock a notebook PC in a business trip.

It is therefore an important issue as to how to realize an authentication system that can be easily carried by a user and can reduce the occurrence of information leakage even when the user is away from the PC.

An authentication system for authenticating a user who operates an information processing apparatus, according to one aspect of the present invention, includes a personal-identification-information transmitting unit that transmits personal identification information; and a portable authentication apparatus that receives the personal identification information from the personal-identification-information transmitting unit, and performs an authentication process based on the personal identification information received from the personal-identification-information transmitting unit and personal identification information that is stored in the portable authentication apparatus in advance. The portable authentication apparatus includes a control unit that controls provision of at least one of predetermined data and software to the information processing apparatus, based on a result of the authentication process.

An information processing system according to another aspect of the present invention includes a function of authenticating a user who operates an information processing apparatus, based on personal identification information stored in a personal-identification-information transmitting unit and personal identification information stored in a portable authentication apparatus connected to the information processing apparatus. The information processing apparatus is configured to be communicable with other information processing apparatus, determine a presence status of the user based on an authentication status between the personal-identification-information transmitting unit and the portable authentication apparatus, and exchange presence information of the user based on the presence status with the other information processing apparatus.

An information processing system according to still another aspect of the present invention includes a function of authenticating a user who operates an information processing apparatus, based on personal identification information stored in a personal-identification-information transmitting unit and personal identification information stored in a portable authentication apparatus connected to the information processing apparatus. The information processing system includes a status management unit configured to be communicable with the information processing apparatus. The information processing apparatus determines a presence status of the user based on an authentication status between the personal-identification-information transmitting unit and the portable authentication apparatus, and transmits presence information of the user to the status management unit based on the presence status. The status management unit manages the presence information in such a manner that an apparatus capable of communicating with the status management unit refers to the presence information for at least one of the information processing unit.

A control method for an authentication system for authenticating a user who operates an information processing apparatus, according to still another aspect of the present invention, includes transmitting including a personal-identification-information transmitting unit transmitting personal identification information; performing including a portable authentication apparatus performing an authentication process based on the personal identification information received from the personal-identification-information transmitting unit and personal identification information that is stored in the portable authentication apparatus in advance; and controlling including a control unit of the portable authentication apparatus controlling provision of at least one of predetermined data and software to the information processing apparatus, based on a result of the authentication process.

A portable authentication apparatus according to still another aspect of the present invention authenticates a user who operates an information processing apparatus on a connection destination, using a personal-identification-information transmitting unit that transmits personal identification information. The portable authentication apparatus includes a personal-identification-information storing unit that stores first personal identification information; a receiving unit that receives second personal identification information from the personal-identification-information transmitting unit; an authentication processing unit that performs an authentication process with the personal-identification-information transmitting unit, based on the first personal identification information and the second personal identification information; and a control unit that controls provision of at least one of predetermined data and software to the information processing apparatus based on a result of the authentication process.

The above and other features, advantages and technical and industrial significance of this invention will be better understood by reading the following detailed description of presently preferred embodiments of the invention, when considered in connection with the accompanying drawings.

In the drawings:
Fig. 1 is a schematic for illustrating the outline of an authentication method according to the present invention;
Fig. 2 is a schematic for illustrating the outline of an authentication system according to the present invention;
Fig. 3 is a schematic for illustrating an application example of the authentication system according to the present invention;
Fig. 4 is a block diagram of a portable authentication apparatus according to a first embodiment of the present invention;
Fig. 5A is a schematic of the portable authentication apparatus;
Fig. 5B is a schematic for illustrating extension of an antenna of the portable authentication apparatus;
Fig. 6 is a block diagram of a personal-identification-information transmitting unit according to the first embodiment;
Fig. 7A is a schematic of the personal-identification-information transmitting unit;
Fig. 7B is a schematic of respective components of the personal-identification-information transmitting unit;
Fig. 8 is a block diagram of a PC according to the first embodiment;
Fig. 9 is a flowchart of a processing procedure for the authentication system, when a user is away from the PC, according to the first embodiment;
Fig. 10 is a flowchart of a processing procedure for recovering of the authentication system according to the first embodiment;
Fig. 11 is a block diagram of a portable authentication apparatus according to a second embodiment of the present invention;
Fig. 12 is a flowchart of a processing procedure for an alarming process of the portable authentication apparatus according to the second embodiment;
Fig. 13 is a flowchart of a processing procedure for an alarming process of a PC according to the second embodiment;
Fig. 14 is a schematic for illustrating the outline of an authentication system according to a third embodiment of the present invention;
Fig. 15 is a flowchart of a processing procedure for the authentication system according to the third embodiment;
Fig. 16 is a schematic of an example of a status display;
Fig. 17 is a schematic for illustrating the outline of a user tracking process; and
Fig. 18 is a schematic of an example of a location confirmation display.

Exemplary embodiments of the present invention will be explained in detail below with reference to the accompanying drawings.

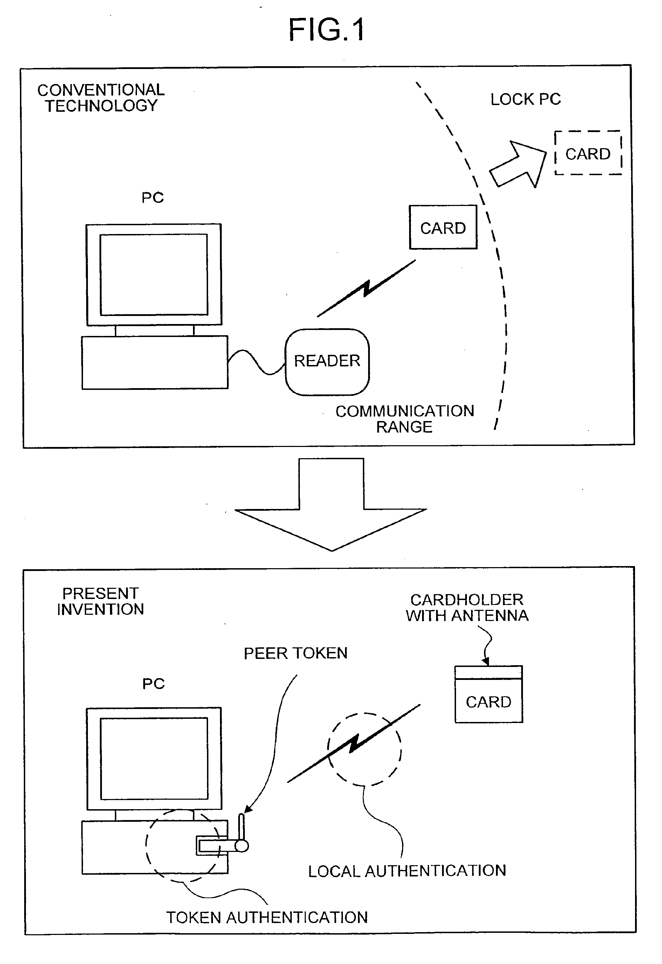

Fig. 1 is a schematic for illustrating the outline of an authentication method according to the present invention. In a conventional authentication method, wireless communication is performed between an authentication apparatus ("reader") connected to a PC via a communication cable and an IC card ("card") carried by a user. When the user leaves from an area capable of communication, it is determined that the user is away from the PC, and the PC operation is locked. When the user returns to the area capable of communication, the locked state is released. In the conventional authentication method, leakage of information such as work data is prevented while the user is away from the PC, by performing such a process.

However, the "reader" used in the conventional authentication method is a stationary authentication apparatus, and it is not sized to be easily carried around. Therefore, when work is carried out while the user moves between PCs, or when a notebook PC is carried out of the office to work, there is a problem in that these apparatuses ("reader" and "card") are not easy to use.

The "card" used in the conventional authentication method has to be one that satisfies a standard that can be read by the "reader" (for example, an IC card or a magnetic strip card). When employee identification cards with a photograph have been already used for identifying employees in companies, the employee identification cards must be changed to the card satisfying the standard, thereby causing a problem in that the introduction cost of the authentication method increases.

In the authentication method according to the present invention, therefore, an authentication process is performed by using a portable authentication apparatus ("peer token" in Fig. 1) that can be directly connected to a USB port or the like of the PC, and a personal-identification-information transmitting unit ("cardholder with antenna") that performs wireless communication with the portable authentication apparatus. The portable authentication apparatus includes a port connector that can be directly connected to the USB port or the like of the PC, and has a key shape of a so-called USB memory (memory stick). Therefore, the user can easily carry the portable authentication apparatus.

The personal-identification-information transmitting unit transmits personal identification information such as an employee ID to the portable authentication apparatus and has a shape of a so-called cardholder capable of receiving (setting) an existing card such as an employee ID card. The shape of the personal identification information apparatus is not limited to the cardholder, and for example, a portable shape such as a pendant, a necklace, a bracelet, a key holder (key fob), a badge type accessory such as a brooch, or a wristwatch can be used.

The same identification number is stored beforehand in an internal memory of the portable authentication apparatus and the personal-identification-information transmitting unit, to set a portable authentication apparatus corresponding to a specific portable authentication apparatus. It is then detected whether both the portable authentication apparatus and the personal-identification-information transmitting unit forming a pair are within a predetermined distance of each other, and it is authenticated whether these are the right pair, by performing communication between the portable authentication apparatus and the personal-identification-information transmitting unit. This authentication process is referred to as "local authentication" below.

The internal memory of the portable authentication apparatus stores groupware and an authentication program to be transferred to the PC, and the PC connected to the portable authentication apparatus initiates the authentication process with the portable authentication apparatus by receiving and operating these programs. The authentication process is referred to as "token authentication" below.

In the "token authentication", it is authenticated whether a user who has connected the portable authentication apparatus to the PC is the authorized user, by requesting the user to input a password using the PC, while using the "local authentication" status obtained via the portable authentication apparatus. When the "token authentication" has been successful, the environment provided to the user is changed. Even after the environment is provided, by continuing these authentication processes, the risk of the authentication apparatus (portable authentication apparatus) being stolen, which is increased due to the portability, is eliminated.

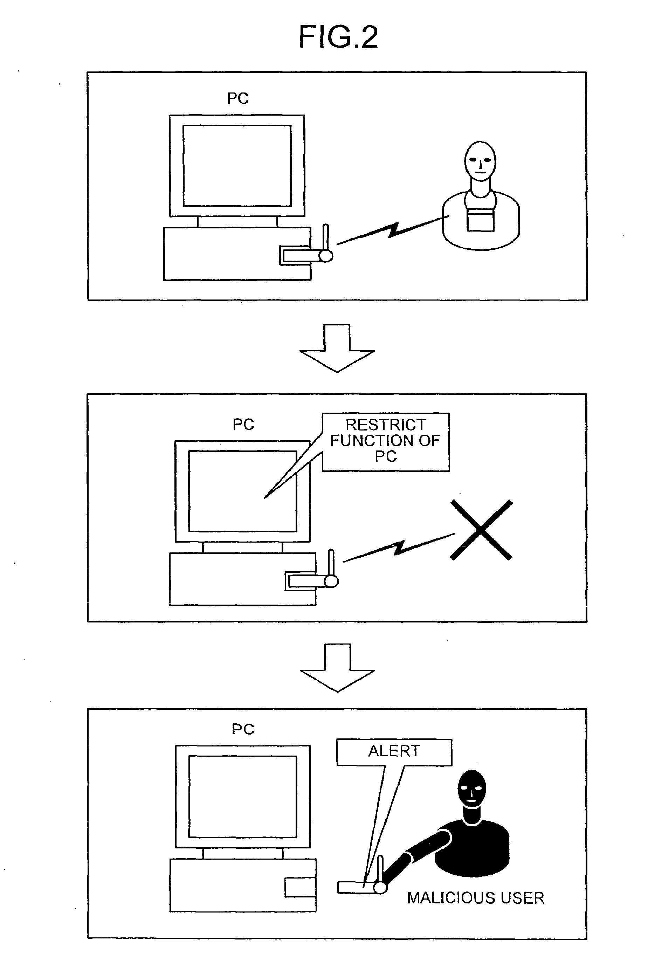

Fig. 2 is a schematic for illustrating the outline of an authentication system according to the present invention. The user carries the personal-identification-information transmitting unit (cardholder with antenna) by hanging it from the neck or the like, and performs operations using the PC connected to the portable authentication apparatus ("peer token"). At this stage, the authentication between the cardholder and the peer token has been successful.

In this state, if communication between the personal-identification-information transmitting unit and the portable authentication apparatus fails due to the user being away from the PC, the portable authentication apparatus instructs to perform a function-restricting process such as locking the PC or changing the work environment by cooperating with the program transferred to the PC.

Furthermore, in the state that the user is away from the PC (in the state that the communication is not possible between the card holder and the peer token), if the portable authentication apparatus is disconnected from the PC, the portable authentication apparatus itself generates an alarm sound, thereby preventing a theft.

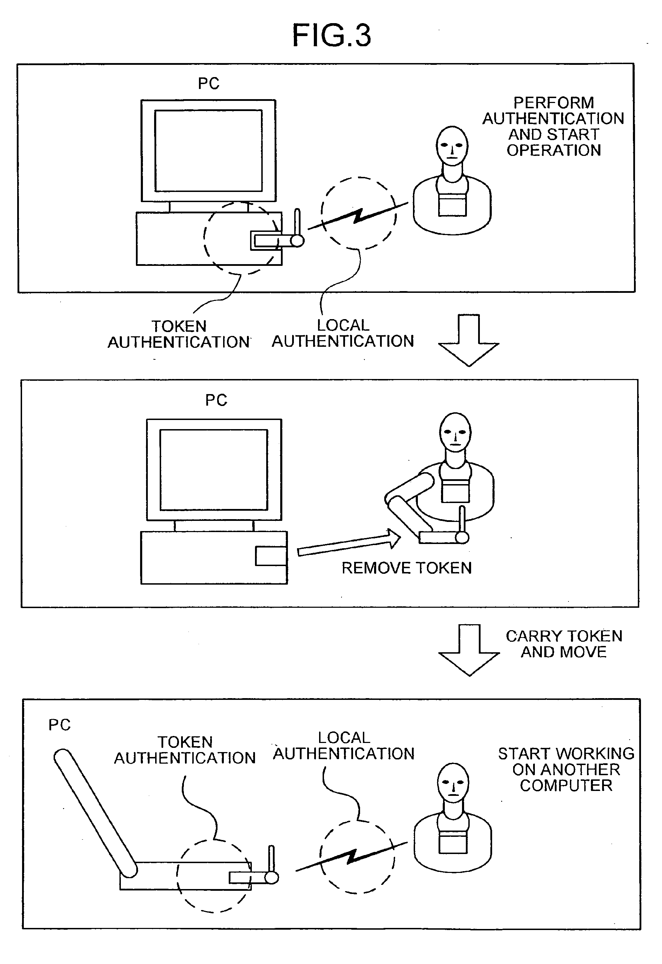

Fig. 3 is a schematic for illustrating an application example of the authentication system according to the present invention. A user uses a pair of the portable authentication apparatus and the personal-identification-information transmitting unit to perform work on a specific PC. When the user wishes to work on another PC, the user detaches the portable authentication apparatus from the PC, carries the portable authentication apparatus and moves to the PC that the user wishes to use.

The user then connects the portable autheritication apparatus to the PC, to start the work by developing (reproducing on the PC) the work environment stored in the portable authentication apparatus. Since the portable authentication apparatus according to the present invention can be easily carried, the personal environment can be easily developed by connecting the portable authentication apparatus to a PC installed in a remote area or a PC used during a business trip. Furthermore, by performing the authentication process, leakage of information from these PCs can be effectively prevented. By applying the authentication system according to the present invention to PCs installed in an Internet cafe or the like, a personalised environment can be provided, while preventing information leakage.

Furthermore, by using the "local authentication" status of the peer token and the card holder, the user status can be accurately obtained, and the work place of the user can be confirmed (location confirmation).

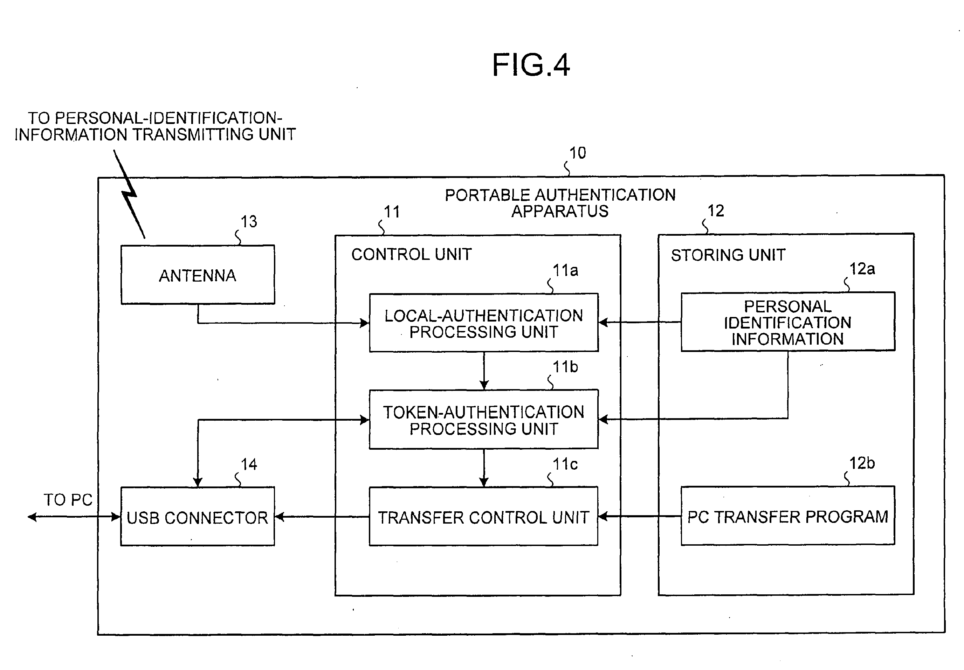

Fig. 4 is a block diagram of a portable authentication apparatus 10 according to a first embodiment of the present invention. The portable authentication apparatus 10 includes a control unit 11, a storing unit 12, an antenna 13, and a USB connector 14. The control unit 11 includes a local-authentication processing unit 11a, a token-authentication processing unit 11b, and a transfer control unit 11c. The storing unit 12 includes personal identification information 12a, and a PC transfer program 12b.

The control unit 11 performs a local authentication process (first authentication process) with a personal-identification-information transmitting unit 20 via the antenna 13, and performs a token authentication process (second authentication process) with a PC 30 connected via the USB connector 14.

The local-authentication processing unit 11a communicates with the personal-identification-information transmitting unit 20 via the antenna 13, to identify the personal-identification-information transmitting unit 20 forming a pair based on whether the personal identification information received from the personal-identification-information transmitting unit 20 matches with the personal identification information 12a in the storing unit 12. The local-authentication processing unit 11a further detects whether the distance from the personal-identification-information transmitting unit 20 is equal to or shorter than a predetermined value based on a field strength or the like, and performs processing for determining whether the user is present or absent.

For example, when the personal identification information received from the personal-identification-information transmitting unit 20 is "0001" and the personal identification information 12a read from the storing unit 12 is also "0001", the local-authentication processing unit 11a determines that the personal-identification-information transmitting unit 20 as a partner and the apparatus itself (the portable authentication apparatus 10) are the right pair. When the local-authentication processing unit 11a determines that the distance from the personal-identification-information transmitting unit 20 is equal to or shorter than the predetermined value, the local-authentication processing unit 11a determines that the user is present, and when the distance is larger than the predetermined value, the local-authentication processing unit 11a determines that the user is away from the PC.

The token-authentication processing unit 11b communicates with the PC 30 via the USB connecter 14, controls the start and end of the token authentication process with the PC 30, and also instructs a transfer of the PC transfer program 12b to the transfer control unit 11c.

Specifically, when having detected that the portable authentication apparatus 10 is connected to a USB port 33 of the PC 30, the token-authentication processing unit 11b determines whether the token authentication is to be started based on the processing result of the local-authentication processing unit 11a. That is, when the personal-identification-information transmitting unit 20 and the apparatus itself (the portable authentication apparatus 10) are the right pair and the distance between the personal-identification-information transmitting unit 20 and the apparatus itself is equal to or shorter than the predetermined value, the token-authentication processing unit 11b receives the processing result indicating, for example, that the local authentication process has been successful, and determines to start the "token authentication process".

When the PC 30 does not have a device driver or an application program for performing the token authentication at the time of starting the "token authentication process", the device driver or the application program stored beforehand in the portable authentication apparatus 10 is transferred to the PC 30.

In this case, the token-authentication processing unit 11b instructs the transfer control unit 11c to transfer the PC transfer program 12b and cooperate with the program transferred to the PC 30, thereby performing processing such as displaying of the personal environment and notification of local authentication status.

In the explanation below, in performing the token authentication process, it is presupposed that the device driver or the application program used for the token authentication process has been already installed in the PC 30. If the software is not installed yet, the transfer control unit 11c executes installation based on the user's instruction, in the state that the local authentication is successful.

The token authentication process is started in the state that the local authentication process is successful. Specifically, when the portable authentication apparatus 10 is connected to the PC 30, the local authentication process is performed, and when the local authentication process is successful, the token authentication process is initiated subsequently.

When the token authentication process is initiated, an input screen is displayed on a display of the PC 30, and the user inputs an authenticator (user name and password) by a keyboard or the like, and transmits the input authenticator to the portable authentication apparatus 10. The token-authentication processing unit 11b in the portable authentication apparatus 10 compares the input authenticator with an authenticator registered beforehand in the storing unit 12, and when the respective authenticators match with each other, allows the user to use the portable authentication apparatus 10 as the authorized user of the portable authentication apparatus 10. On the other hand, when the respective authenticators do not match with each other, the user is not allowed to use the portable authentication apparatus 10 as an unauthorized user. The authenticator can be the same as the personal identification information 12a according to the setting by the user.

Since the authentication process is performed by the token-authentication processing unit 11b included in the portable authentication apparatus 10 (authentication in token), the authenticator stored beforehand in the storing unit 12 of the portable authentication apparatus 10 is not output to the outside. Therefore, the safety in view of the security can be ensured by performing such authentication in token.

The token-authentication processing unit 11b can perform only the transfer processing of the authenticator to the PC 30, and the authentication process itself can be performed by a management server (authentication in the server) on a network, or by firmware of the PC 30 (authentication in the PC).

When both the token authentication process and the local authentication process are successful, the data and the application program for constructing the work environment of the user are transferred based on an instruction input by the user. Upon reception thereof, the PC 30 performs installation process and the like of the program for constructing the work environment (personal environment) of the user.

When the connection with the portable authentication apparatus 10 is released, or when the user is away from the PC 30 for a predetermined time, the personal environment is deleted from the PC 30 by uninstalling the data and the application program, to return to the environment before constructing the personal environment (public environment). The public environment can be an environment prohibiting the operation of a user who has displayed a log-in screen requesting the authentication processing unit an environment prohibiting only the use of groupware, and allowing other operations.

The PC transfer program 12b in the portable authentication apparatus 10 includes the device driver, the groupware as the application program, a personal authentication library, a communication driver, a USB driver, and the like beforehand. The remaining area following such a program area is a data area, and file data transferred by the operation after the construction of the personal environment is stored therein.

The device driver is a program for performing data transfer when the portable authentication apparatus 10 is connected to the PC 30. When the PC 30 does not possess the device driver, the transfer control unit 11c transfers the device driver to the PC 30 to install it in the PC 30, in the state that the local authentication process is successful. The PC 30 communicates with the portable authentication apparatus 10 via the installed device driver.

When the device driver is installed in the PC 30, the personal authentication library is installed via the device driver, and for example, an authentication screen is displayed on the PC 30. The authenticator input to the portable authentication apparatus 10 is transmitted, upon reception of the input of the authenticator (user name and password) by the user.

The token-authentication processing unit 11b in the portable authentication apparatus 10 compares the input authenticator and the authenticator registered beforehand in the storing unit 12, and when the respective authenticators match with each other, performs the authentication process for allowing the user to use the portable authentication apparatus 10 as the authorized user of the portable authentication apparatus 10. When the authentication process is successful, installation of the groupware to the PC 30 is performed. On the other hand, when the authentication process fails, the installation of the groupware is not performed and the user is prohibited from setting up the personal environment on the PC 30.

When the personal authentication library is installed on the PC 30 and the authentication process is successful, the groupware is downloaded to the PC 30 via the device drive, and a groupware system environment corresponding to each user is constructed on the PC 30, thereby enabling transfer by means of peer-to-peer data sharing. The groupware system environment is one example of the personal environment.

When the user finishes using the PC 30, the portable authentication apparatus 10 is detached from the PC 30 after finishing the application of the groupware system environment. When the application finishing operation of the groupware is performed prior to the detachment of the portable authentication apparatus 10, the PC 30 sends a termination notification to the portable authentication apparatus 10, so that the portable authentication apparatus 10 performs the necessarily termination process, and at the same time, the PC 30 automatically uninstalls the installed device driver, personal authentication library, and groupware.

All the data transferred in the personal environment are stored in the storing unit 12 of the portable authentication apparatus 10. Therefore, when the portable authentication apparatus 10 is detached from the PC 30, the whole personal environment constructed by the connection of the portable authentication apparatus 10 is deleted and the environment returns to the public environment before constructing the personal environment. Therefore, if the PC 30 is used with the portable authentication apparatus 10, the personal environment constructed by using the portable authentication apparatus 10 is not left after the use.

The transfer control unit 11c reads the PC transfer program 12b from the storing unit 12 upon reception of an instruction from the token-authentication processing unit 11b, and performs processing for transferring these programs to the PC 30 via the USB connector 14.

The storing unit 12 is formed of a nonvolatile memory such as a flash memory and stores the personal identification information 12a and the PC transfer program 12b beforehand. The personal identification information 12a is stored in a read only area to prevent falsification by a malicious user.

The personal identification information 12a is an ID, which is a unique number or character string for specifying a user, and corresponds to personal identification information 22a stored beforehand in a storing unit 22 of the personal-identification-information transmitting unit 20. The personal identification information 12a also includes an identifier used in the token authentication. To prevent leakage of the personal identification information 12a, such an ID can be encrypted using a hash function or the like, and the encrypted ID can be prestored.

The PC transfer program 12b is program group and data such as the device driver, the groupware, and the token authentication program. The PC transfer program 12b includes a program for inputting a password from the PC 30, which is used in the "token authentication process". In the first embodiment, a case that the program group is transferred to the PC 30 and the transferred program and the portable authentication apparatus cooperate will be explained, however, these program groups can be installed beforehand in the PC 30.

The PC transfer program 12b includes data and software (programs such as the device driver and a tool) for constructing the personal environment on the PC 30. A plurality of versions can be included in the data and the software. For example, if the OS version installed on the respective PCs 30 is different, the personal environment can be provided by transferring the device driver and the like corresponding to the respective OS versions to the PC 30.

The antenna 13 is a device such as a helical whip antenna for communicating with the personal-identification-information transmitting unit 20. The antenna 13 can be expanded and contracted or the direction thereof can be changed. At the time of being carried, the portability is improved by folding the antenna, and at the time of use, the antenna is set to a direction having high sensitivity, so as to obtain the communication gain easily. The USB connector 14 is a device for communicating with the PC 30.

According to the first embodiment, communication with the PC 30 is performed via the USB connector 14, however, it is not limited thereto and other communication devices can be used. For example, the portable authentication apparatus 10 itself can have a shape of a so-called PC card, and inserted into a PC card slot of the PC 30.

The portable authentication apparatus 10 having a connector directly connected to the USB port as in the first embodiment is remarkably convenient for carrying. However, the portable authentication apparatus 10 can also be one mounted with a self-winding USB cable. According to the first embodiment, the portable authentication apparatus 10 directly connected to the USB port of the PC 30 has been explained, however, the portable authentication apparatus 10 can be connected to the PC 30 via a USB hub or a USB cable connected to the USB port of the PC 30.

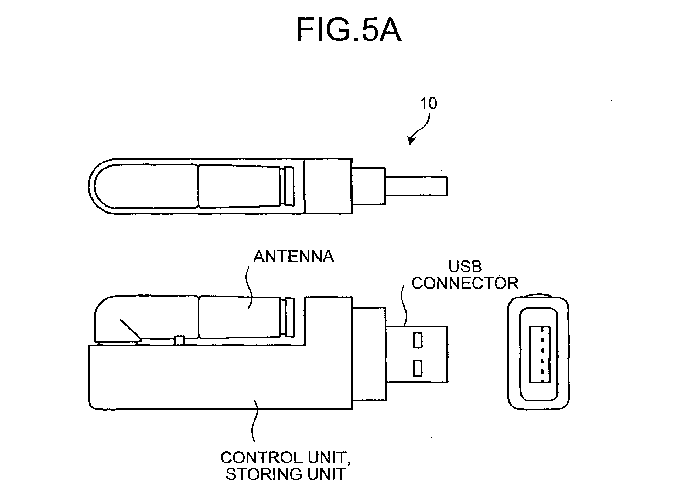

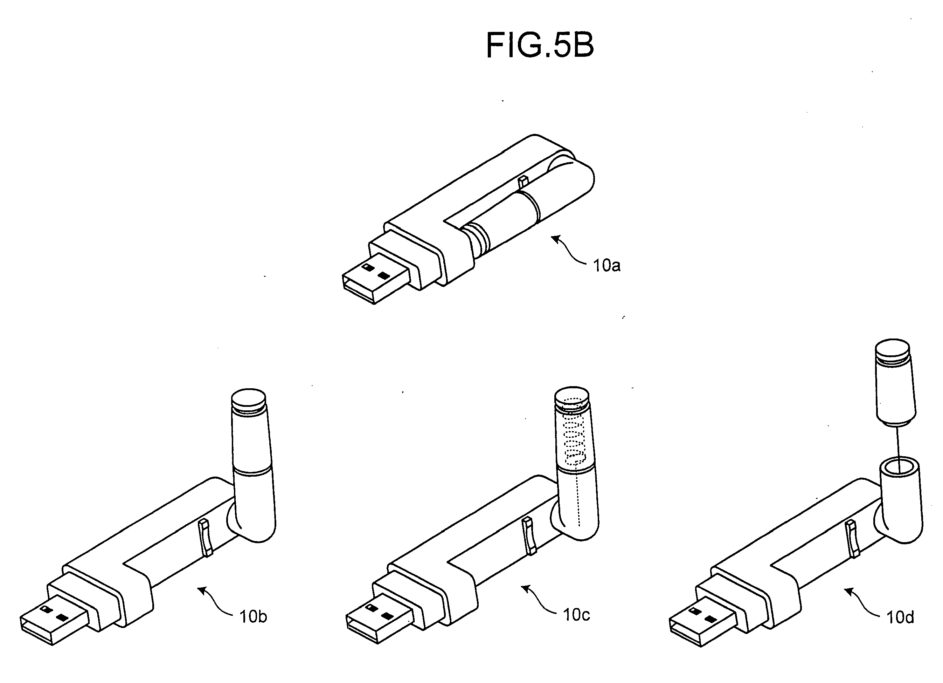

Fig. 5A is a schematic of the portable authentication apparatus 10, and Fig. 5B is a schematic for illustrating extension of an antenna of the portable authentication apparatus 10. As shown in Fig. 5A, the portable authentication apparatus 10 has a shape of a so-called USB memory, and also includes an extendable antenna. Thus, since the portable authentication apparatus 10 has a shape with excellent portability, users can carry it easily.

As shown in Fig. 5B, at the time of carrying the antenna, the antenna can be folded, and as shown by 10b, the antenna can be extended upright at the time of use. As shown by 10c, the antenna is a helical whip antenna, and as shown by 10d, the antenna can be extended. Thus, good radio communication can be maintained, according to the relative position of the portable authentication apparatus 10 with the personal-identification-information transmitting unit 20.

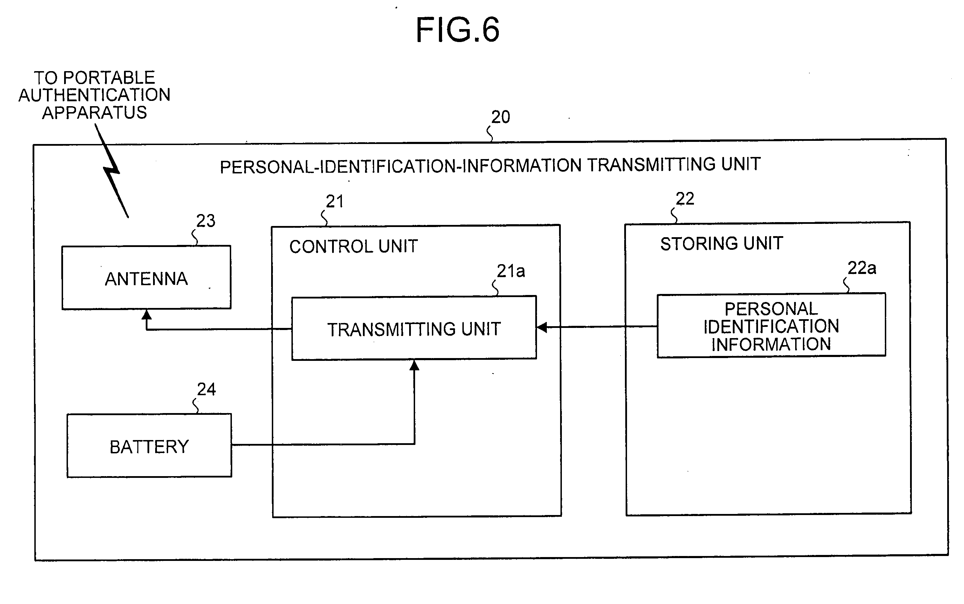

Fig. 6 is a block diagram of the personal-identification-information transmitting unit 20 according to the first embodiment. The personal-identification-information transmitting unit 20 includes a control unit 21, the storing unit 22, an antenna 23, and a battery 24. The control unit 21 includes a transmitting unit 21a, and the storing unit 22 includes personal identification information 22a.

The control unit 21 operates upon reception of power feed from the battery 24. The transmitting unit 21a reads the personal identification information 22a from the storing unit 22, and transmits the read information to the portable authentication apparatus 10 via the antenna 23.

The storing unit 22 is formed of a nonvolatile memory such as a flash memory and stores the personal identification information 22a therein beforehand. The personal identification information 22a is stored in a read only area, to prevent falsification by a malicious user.

The antenna 23 is a device such as a helical whip antenna for communicating with the portable authentication apparatus 10. The antenna 23 is provided, for example, on an upper surface or a side of the device itself (the personal-identification-information transmitting unit 20).

The battery 24 is a button battery, and for example, provided at the back of the device itself (the personal-identification-information transmitting unit 20). Thus, by providing the battery at the back, the battery does not disturb the visibility of the employee identification card or the like. Furthermore, when such a configuration is used that a plurality of batteries is mounted, so that while replacing one battery, power can be fed from another battery, transmission process is not interrupted.

The personal-identification-information transmitting unit 20 according to the first embodiment is a so-called active communication apparatus, and has a wider range (communicable area) than a passive communication apparatus. Therefore, the personal-identification-information transmitting unit 20 can efficiently detect whether the user is present or away from the PC, without forcing the user to bring the personal-identification-information transmitting unit 20 close to the portable authentication apparatus 10 intentionally.

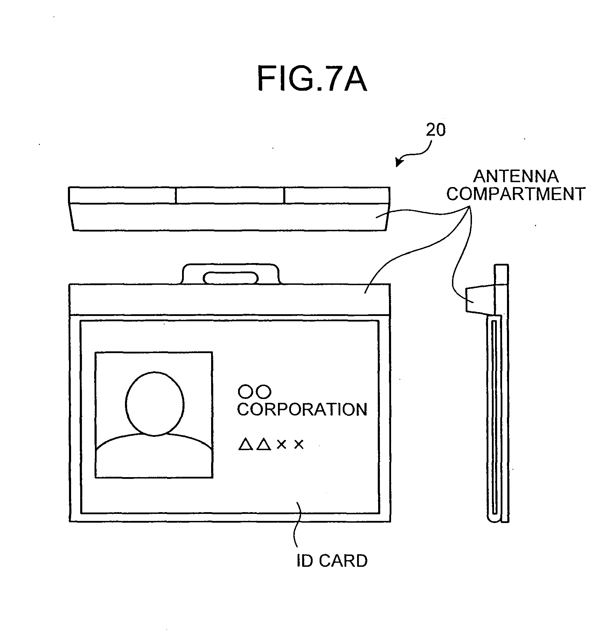

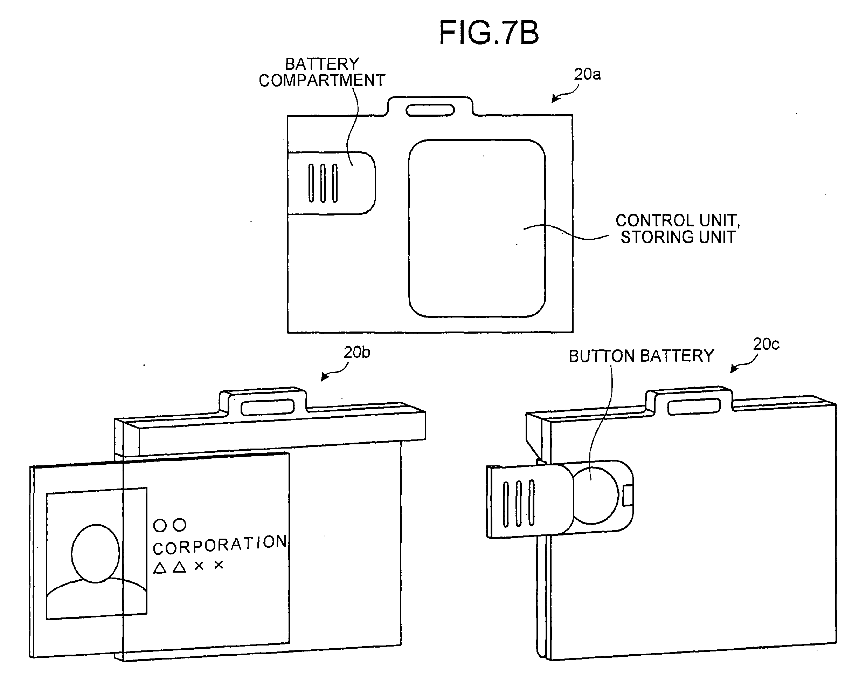

Fig. 7A is a schematic of the personal-identification-information transmitting unit. Fig. 7B is a schematic of respective components of the personal-identification-information transmitting unit. As shown in Fig. 7A, the personal-identification-information transmitting unit 20 has a shape of a so-called card holder and an ID card such as an employee ID card can be held in the front portion.

The personal-identification-information transmitting unit 20 has an antenna in the upper part thereof, and transmits the personal identification information 22a to the portable authentication apparatus 10 via the antenna. Since the personal-identification-information transmitting unit 20 has the card holder shape, the user can easily carry it.

As shown in Fig. 7B, since a battery storing unit, a control unit, and a storing unit are arranged at the back thereof, the visibility of the ID card is not disturbed. Since the helical whip antenna is arranged at the top as the antenna, communication with the portable authentication apparatus 10 becomes easy. Furthermore, as shown by 20c, since a thin button battery is used, the size of the apparatus itself can be reduced.

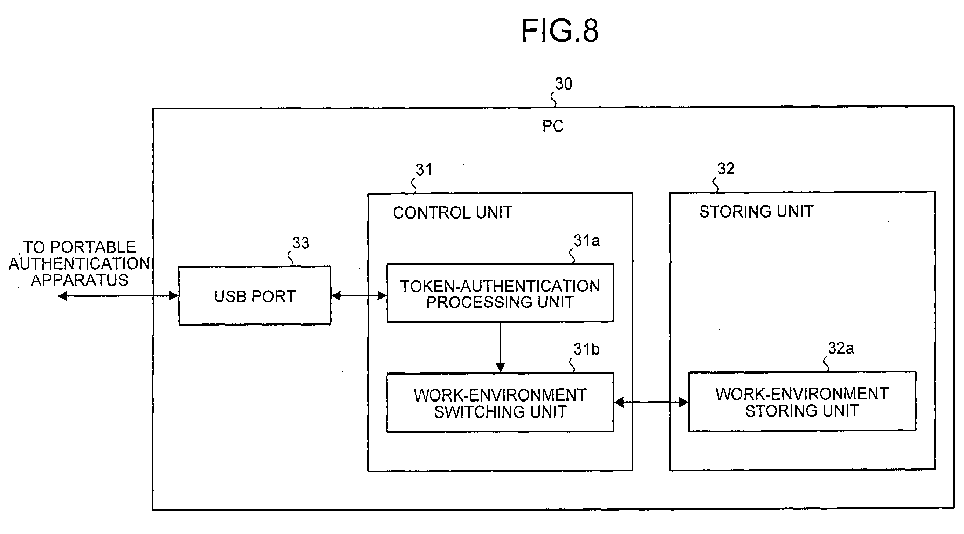

Fig. 8 is a block diagram of the PC 30 according to the first embodiment. The PC 30 includes a control unit 31, a storing unit 32, and the USB port 33. The control unit 31 further includes a token-authentication processing unit 31a and a work environment switching unit 31b, and the storing unit 32 further includes a work environment storing unit 32a. The token-authentication processing unit 31a and the work environment switching unit 31b are formed by operating the PC transfer program 12b on the PC 30, which is transferred from the portable authentication apparatus 10.

Therefore, a general personal computer can be used as the PC 30. Accordingly, the authentication process can be easily performed by carrying only the personal-identification-information transmitting unit 20 or carrying the portable authentication apparatus 10 and the personal-identification-information transmitting unit 20.

The control unit 31 performs the token authentication with the portable authentication apparatus 10 via the USB port 33. The token-authentication processing unit 31a obtains information relating to whether the user is present or away from the PC from the portable authentication apparatus 10, and instructs the work environment switching unit 31b to switch the work environment based on the obtained information.

The work environment switching unit 31b switches the work environment provided to the user based on the instruction from the token-authentication processing unit 31a. Specifically, when having obtained the information indicating that the token authentication process has been successfully initiated from the token-authentication processing unit 31a, the work environment switching unit 31b provides the personal work environment to the user. When the work environment switching unit 31b obtains information indicating that the user is away from the PC, after having started the token authentication process, the work environment switching unit 31b hides the provided personal work environment in the work environment storing unit 32a in the storing unit 32, and switches the work environment to the public environment.

The storing unit 32 is formed of a memory such as a random access memory (RAM). The work environment storing unit 32a hides the personal work environment once provided to the user. The information in the work environment storing unit 32a is deleted when the authorized user detaches the portable authentication apparatus 10 from the USB port 33.

The USB port 33 is for connecting the portable authentication apparatus 10 to the PC 30. In the first embodiment, the communication with the portable authentication apparatus 10 is performed via the USB port 33, however, the communication method is not limited thereto and other communication devices can be used. For example, when the portable authentication apparatus 10 itself has a shape of a memory card, a memory card slot can be used instead of the USB port 33.

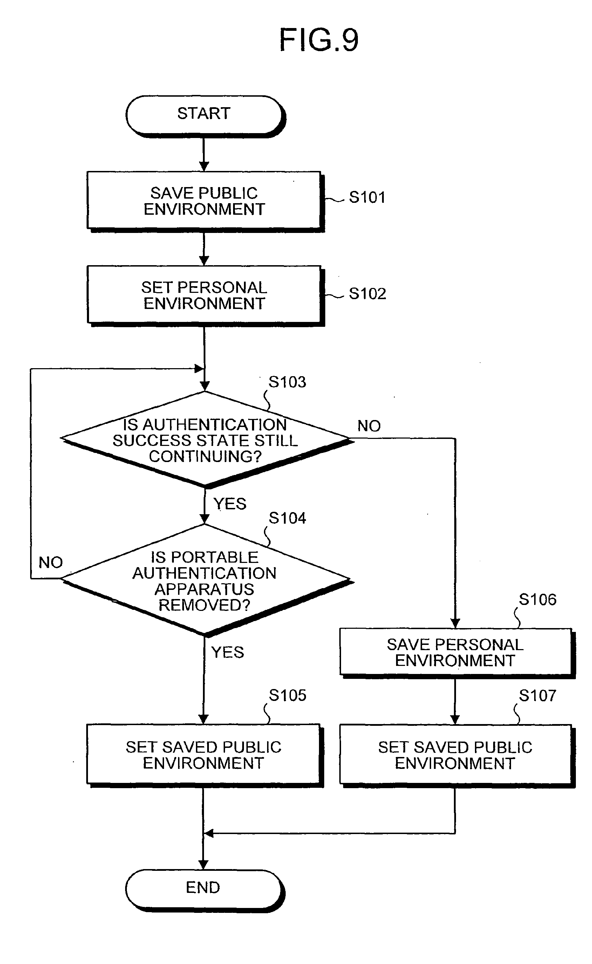

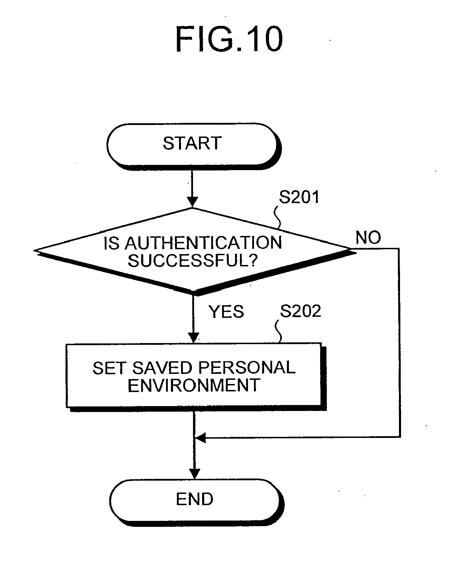

Fig. 9 is a flowchart of a processing procedure for the authentication system, when a user is away from the PC, according to the first embodiment. Fig. 10 is a flowchart of a processing procedure for recovering of the authentication system according to the first embodiment.

As shown in Fig. 9, in the PC 30 connected with the portable authentication apparatus 10, when the work environment switching unit 31b obtains information indicating that the token authentication process has been successfully initiated from the token-authentication processing unit 31a, the work environment switching unit 31b hides the public environment (step S101), and sets the personal environment based on the information provided from the portable authentication apparatus 10 (step S102), to provide the work environment corresponding to the respective users.

The token-authentication processing unit 31a determines whether the authentication successful state between the portable authentication apparatus 10 and the personal-identification-information transmitting unit 20 still continues (step S103). When the token-authentication processing unit 31a detects that the authentication successful state has ended (that the user is away from the PC) (step S103, No), the token-authentication processing unit 31a hides the provided personal environment in the work environment storing unit 32a in the storing unit 32 (step S106), sets again the hidden public environment (step S107), and finishes the processing.

On the other hand, when the authentication successful state continues (step S103, Yes), the token-authentication processing unit 31a determines whether the portable authentication apparatus 10 is detached from the USB port (step S104). When the portable authentication apparatus 10 is not detached (step S104, No), monitoring of the authentication status is continued by repeating the processing from step S103 onward. When the token-authentication processing unit 31a detects that the portable authentication apparatus 10 is detached (that the authorized user finishes the operation) (step S104, Yes), the token-authentication processing unit 31a sets again the hidden public environment (step S105), to finish the processing.

As shown in Fig. 10, when the user has been away from the PC and returns to resume work, the token-authentication processing unit 31a determines whether the authentication process between the portable authentication apparatus 10 and the personal-identification-information transmitting unit 20 succeeds again (step S201). When the authentication process is successful again (the user returns to resume the work) (step S201, Yes), the work environment switching unit 31b sets up the hidden personal environment again (step S202), to finish the processing. On the other hand, when the authentication process has failed (when the user has not returned yet) (step S201, No), the work environment switching unit 31b finishes the processing without switching the work environment.

According to the first embodiment, the authentication system is configured to include the personal-identification-information transmitting unit that stores the personal identification information beforehand and transmits the personal identification information via the antenna, and the portable authentication apparatus that stores the personal identification information common with the personal-identification-information transmitting unit beforehand, to compare the personal identification information with the personal identification information received from the personal-identification-information transmitting unit, and performs the local authentication based on whether the communication is successful between the personal-identification-information transmitting unit and the portable authentication apparatus. The authentication system further includes the information processing apparatus that receives the local authentication result via the portable authentication apparatus by executing the program provided from the portable authentication apparatus and changes the work environment provided to the user based on the result. Accordingly, the authentication system, the control method thereof, the information processing system, and the portable authentication apparatus, which can be easily carried by the user and can be easily applied to a PC used by a plurality of users, can be provided.

The portability of the portable authentication apparatus 10 according to the first embodiment is improved by reducing the size of the apparatus itself. However, due to the portability, a risk of the portable authentication apparatus 10 being stolen also increases. Since the information such as the personal identification information 12a and the PC transfer program 12b are stored in the portable authentication apparatus 10, taking countermeasures against theft is required to prevent information leakage.

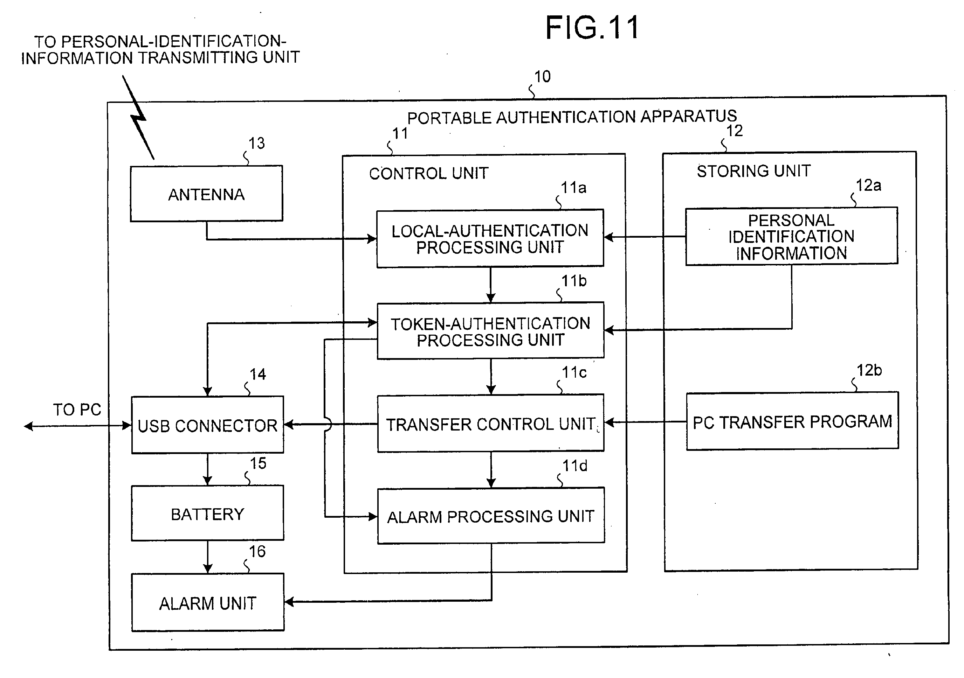

Fig. 11 is a block diagram of a portable authentication apparatus 10 according to a second embodiment of the present invention. Those features different from the portable authentication apparatus 10 (see Fig. 4) according to the first embodiment will be explained, and explanation of the common features will be omitted.

The portable authentication apparatus 10 according to the second embodiment is different from that of the first embodiment in that the control unit 11 further includes an alarm processing unit 11d, and a battery 15 and an alarm unit 16 are provided. The alarm processing unit 11d instructs the alarm unit 16 to generate an alarm sound upon reception of an instruction from the token-authentication processing unit 11b.

Specifically, when the user carrying the personal-identification-information transmitting unit 20 is away from the portable authentication apparatus 10 (away from the PC) by a predetermined distance, after having started the token authentication, the alarm processing unit 11d performs processing for generating a sound by the built-in alarm unit 16 upon detection that the portable authentication apparatus 10 is detached from the PC 30. A detection process can be performed by detecting that the power feed (bus power) via the USB connector 14 is suspended.

The battery 15 is formed of a battery or a capacitor having a large capacity, and can be charged by feeding power from the USB connector 14. Such power feed can not be carried out once the apparatus is disconnected from the PC. The alarm unit 16 generates the alarm sound in response to an instruction from the alarm processing unit 11d. Since the alarm unit 16 continues to operate by power feed from the battery 15, it can effectively warn a user who is trying to steal the portable authentication apparatus 10.

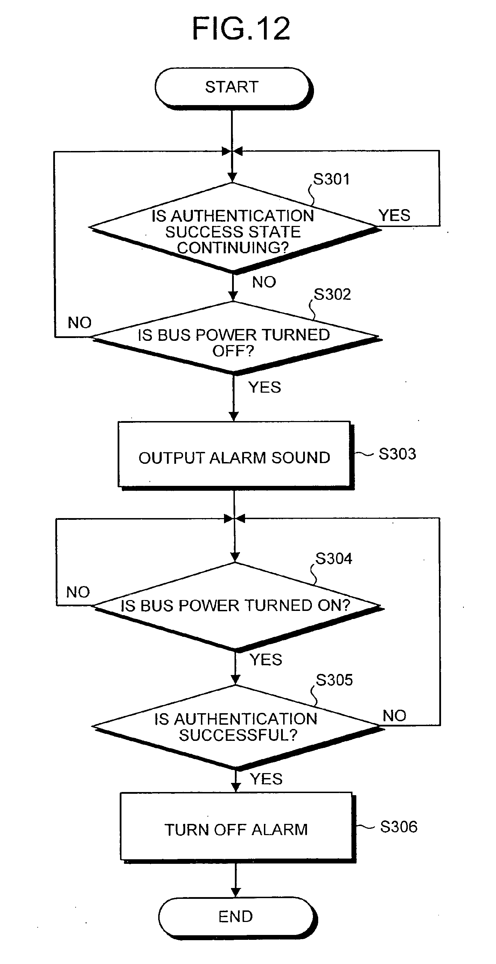

Fig. 12 is a flowchart of a processing procedure for an alarming process of the portable authentication apparatus 10 according to the second embodiment. The portable authentication apparatus 10 determines whether the successful state of the local authentication process continues between the personal-identification-information transmitting unit 20 and the portable authentication apparatus 10 (step S301). When the successful state of the local authentication process continues (when the user is present) (step S301, Yes), the portable authentication apparatus 10 repeats the determination process at step S301.

On the other hand, when the local authentication process fails (the user is away from the PC) (step S301, No), the portable authentication apparatus 10 determines whether the bus power via the USB connector 14 is turned OFF (step S302). When the bus power is turned OFF (step S302, Yes), the alarm processing unit 11d instructs the alarm unit 16 to generate an alarm sound (step S303). When the bus power is turned ON (step S302, No), the processing from step S301 is repeated.

The portable authentication apparatus 10 determines whether the bus power is turned ON (step S304). When the bus power is turned ON (step S304, Yes), the portable authentication apparatus 10 determines whether the local authentication has been successful (step S305). When the bus power remains OFF (step S304, No), generation of the alarm sound is continued since the determination process at step S304 is repeated.

When the local authentication has been successful (step S305, Yes), the portable authentication apparatus 10 determines that the authorized user reconnects the portable authentication apparatus 10 with the personal-identification-information transmitting unit 20, and suspends generation of the alarm sound (step S306), to finish the processing. On the other hand, when the local authentication fails (step S305, No), the portable authentication apparatus 10 determines that the portable authentication apparatus 10 is reconnected with the personal-identification-information transmitting unit 20 by a thief, and continues generation of the alarm sound. Accordingly, an alert is issued to the thief, and it can be informed to nearby users that the portable authentication apparatus is being stolen.

While in Figs. 11 and 12, a case that the portable authentication apparatus 10 includes the alarm function has been explained, the PC 30 side can also perform the alarm processing. When the PC 30 side performs the alarm processing, since the operating system can detect that the apparatus connected to the USB port has been detached, this information is used to generate an alarm sound from a speaker, or it is notified that the portable authentication apparatus has been stolen to other computers connected to the network such as the LAN.

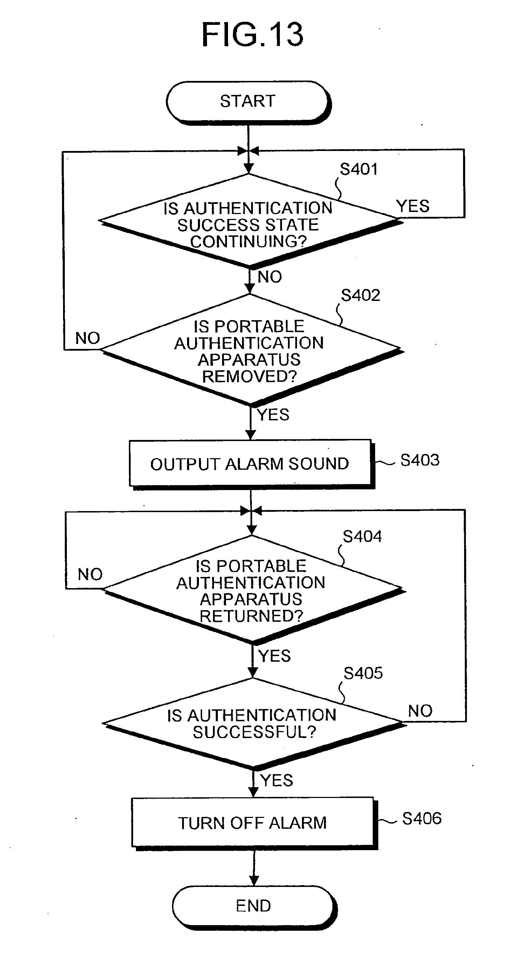

Fig. 13 is a flowchart of a processing procedure for an alarming process of the PC 30 according to the second embodiment. In the PC 30, the token-authentication processing unit 31a determines whether the successful state of the local authentication process continues between the portable authentication apparatus 10 and the personal-identification-information transmitting unit 20 (step S401). While the successful state of the local authentication process is continuing (the user is present) (step S401, Yes), the token-authentication processing unit 31a repeats the determination process at step S401.

On the other hand, once the local authentication process fails (the user is away from the PC) (step S401, No), the token-authentication processing unit 31a obtains the information indicating that the apparatus connected to the USB port 33 is detached via the operation system, to determine whether the portable authentication apparatus 10 is detached (step S402). When the portable authentication apparatus 10 is detached (step S402, Yes), the PC 30 generates the alarm sound (step S403). When the portable authentication apparatus 10 is not detached (step S402, No), the token-authentication processing unit 31a repeats the processing from step S401 onward.

The PC 30 determines whether the portable authentication apparatus 10 is returned to the connected state (step S404). When the portable authentication apparatus 10 is returned to the connected state (step S404, Yes), the PC 30 determines whether the local authentication has been successful (step S405). When the portable authentication apparatus 10 remains detached from the PC 30 (step S404, No), since the determination process at step S404 is repeated, generation of the alarm sound continues.

When the local authentication has been successful (step S405, Yes), the PC 30 determines that the authorized user has reconnected the portable authentication apparatus 10 and suspends generation of the alarm (step S406), to finish the processing. If the reconnected port is different from the port connected before, generation of the alarm sound can be continued.

On the other hand, when the local authentication has failed (step S405, No), the PC 30 determines that the thief has reconnected the portable authentication apparatus 10 and continues generation of the alarm sound. Thus, since generation of the alarm sound continues unless reconnection by the authorized user is performed, the fact that the portable authentication apparatus 10 is stolen is notified to users nearby.

According to the second embodiment, the alarm function is included in the portable authentication apparatus 10 or the PC 30. Therefore, when the authorized user is away from the PC, if the portable authentication apparatus 10 is detached from the PC 30, the portable authentication apparatus 10 or the PC 30 generates the alarm sound. Accordingly, effective alert can be given to the thief and users nearby.

While generation of the alarm sound by the portable authentication apparatus 10 or the PC 30 has been explained as an example of a theft alert of the portable authentication apparatus 10, the theft alert is not limited thereto, and a light emitting apparatus such as a light emitting diode (LED) can be provided in the portable authentication apparatus 10 for warning the theft by lighting, blinking, or the like of the light emitting apparatus. An electrode can be provided on the surface, for example, at a holding portion, of the portable authentication apparatus 10, for warning the theft by applying a high voltage to the electrode.

Furthermore, an imaging device whose imaging operation is controlled by the PC 30 can be used to capture images of the thief, instead of warning the theft by the PC 30, by generating the alarm sound. This imaging device can be integrated with the PC 30, or can be directly connected to the network (including wireless and wired networks) and controlled by the PC via the network. Alternatively, imaging by the imaging device and generation of the alarm sound can be performed concurrently. An alert notification (photograph and warning dialog) can be issued by telephone or by e-mail to the authorized user through the network, or can be transmitted to the personal-identification-information transmitting unit 20.

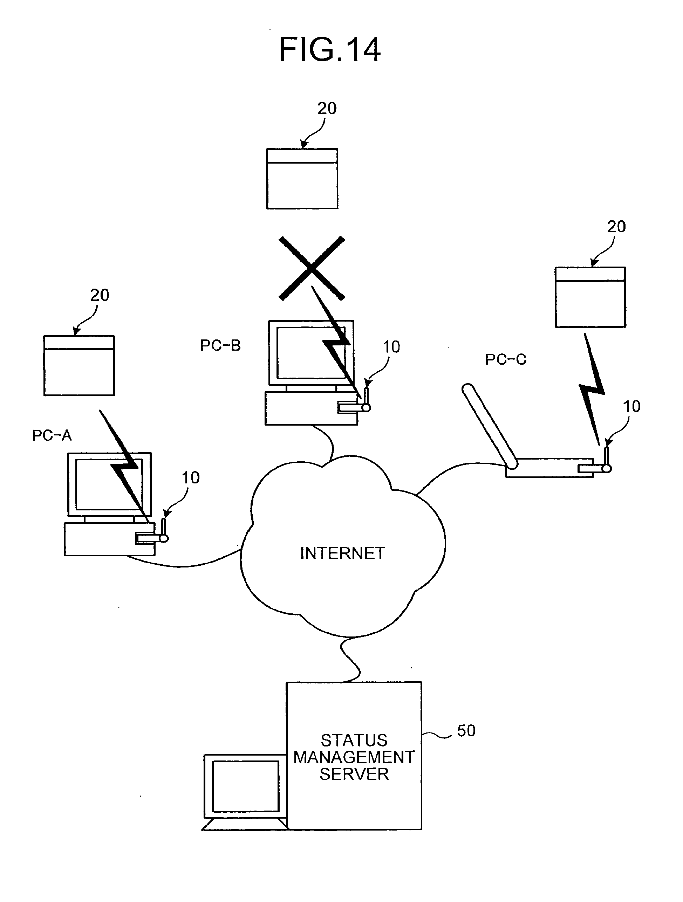

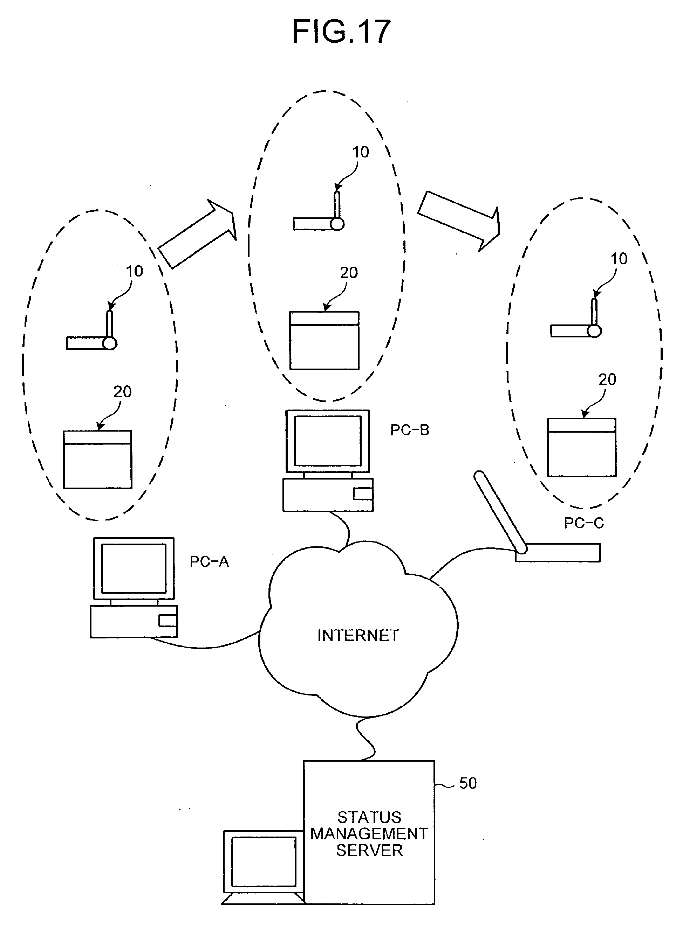

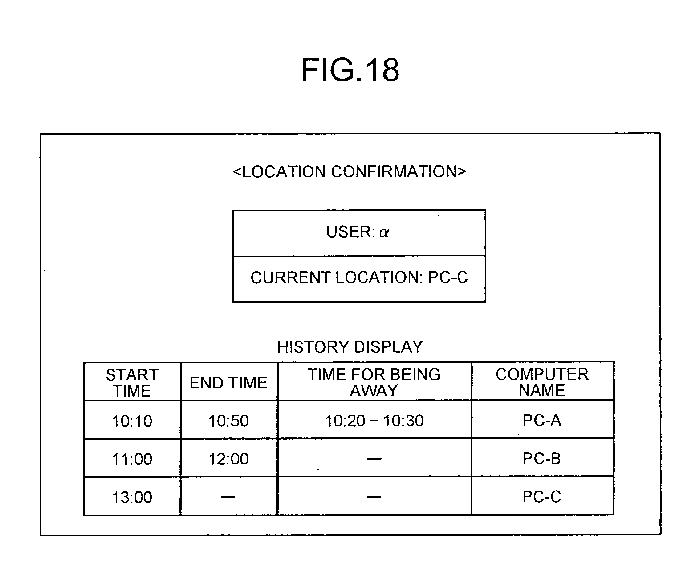

According to a third embodiment of the present invention, a case that the user's status is accurately obtained (status processing) or the user's work place is confirmed (location confirmation process) by using the "local authentication" status between the portable authentication apparatus 10 and the personal-identification-information transmitting unit 20 will be explained with reference to Figs. 14 to 18. Figs. 14 to 16 are diagrams relating to the "status processing", and Figs. 17 and 18 are diagrams relating to the "location confirmation process".

Fig. 14 is a schematic for illustrating the outline of an authentication system according to the third embodiment. According to the third embodiment, personal computers (PC-A to PC-C in Fig. 14) that perform the authentication process using the portable authentication apparatus 10 and the personal-identification-information transmitting unit 20 are connected to a network such as the Internet, and a status management server 50 that collectively controls the status of these personal computers is further provided.

The status management server 50 receives the result of the local authentication performed on the respective PCs via the network such as the Internet, accumulates histories (logs) of the presence information of users, and transmits the status of these users to the respective PCs.

Conventionally, there is a method of displaying the status of the user; however, the method has a problem in that the user's status cannot be always displayed accurately. For example, when a function is included by which if the operation by a keyboard and a mouse is not performed for a certain period, it is automatically determined that the user is absent, and the status is changed to an unused state, although the user is still using the PC. Furthermore, the user can pretend to be away from the PC by intentionally selecting the unused state.

According to the third embodiment, therefore, to solve such a problem, an authentication system is provided, which can accurately display the user's status by applying the authentication process using the portable authentication apparatus 10 and the personal-identification-information transmitting unit 20 to the status processing. The status processing performed in the third embodiment can use only the authentication process function using the portable authentication apparatus 10 and the personal-identification-information transmitting unit 20, without performing the work environment changing processing explained in the first embodiment. Alternatively, the authentication process can be performed together with the work environment changing processing explained in the first embodiment.

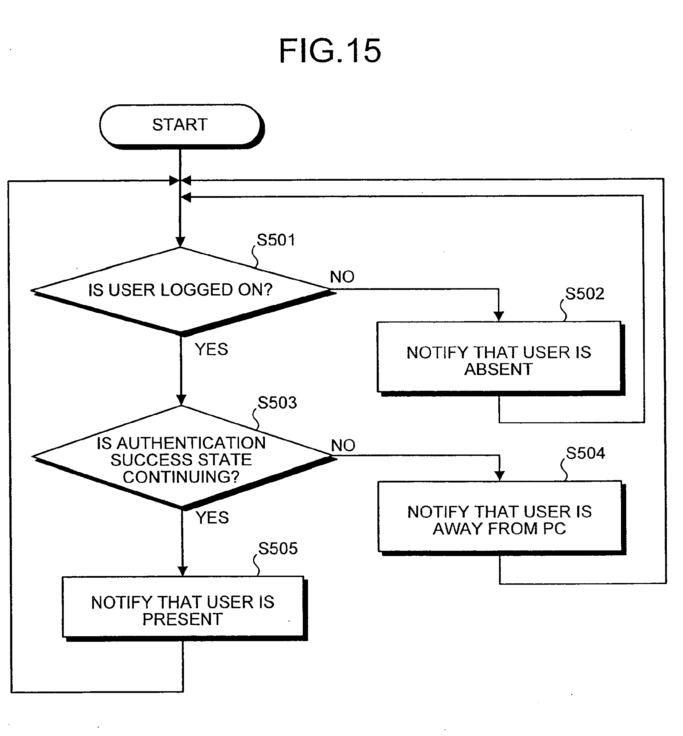

Fig. 15 is a flowchart of a processing procedure for the authentication system according to the third embodiment. The PC connected with the portable authentication apparatus 10 determines whether the user has logged on (step S501).

When the user has logged on (step S501, Yes), the PC determines whether the successful state of the local authentication process continues (step S503). On the other hand, if the user has not logged on (step S501, No), the PC notifies the status management server 50 that the user is absent (step S502).

While the successful state of the local authentication process continues (step S503, Yes), the PC notifies the status management server 50 that the user is present (step S505), and repeats the processing from step S501 onward. On the other hand, after the local authentication process has failed (step S503, No), the PC notifies the status management server 50 that the user is absent (step S504), and repeats the processing from step S501 onward.

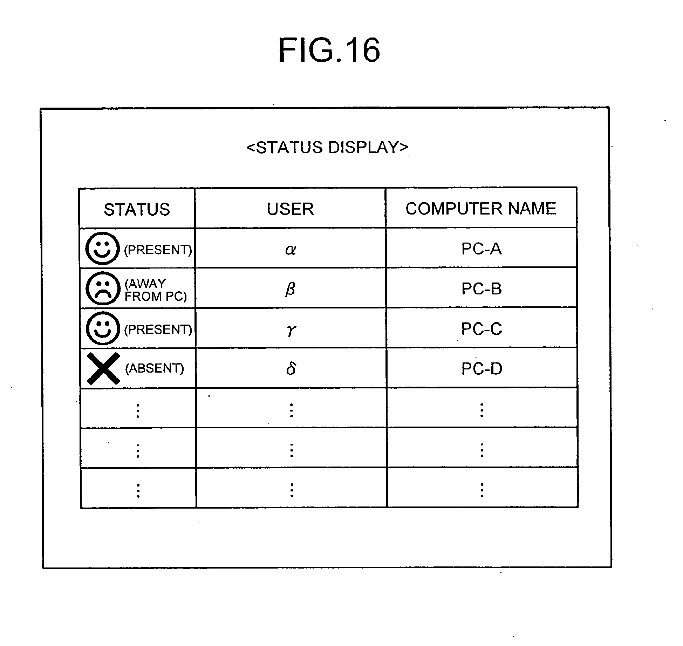

Thus, the status of the respective PCs is continually notified to the status management server 50, and the status management server 50 transmits to the respective PCs a status list obtained by editing these statuses. Fig. 16 is a schematic of an example of a status display.

In Fig. 16, three types of status, that is, "present", "away from the PC", and "absent" are shown. These correspond to "notify that the user is present", "notify that the user is away from the PC", and "notify that the user is absent" in Fig. 15, respectively. Users and managers can accurately recognize the status by referring to the status list.

For example, it can be seen that a user "γ" is present, and is still working with a computer "PC-C". Also, it can be seen that a user "β" had been working with a computer "PC-B", and is currently away from the PC.

Fig. 17 is a schematic for illustrating outline of a user tracking process. The basic configuration shown in Fig. 17 is the same as that of Fig. 14. However, it is different from Fig. 14 in that in the user tracking process, it is assumed that the user carries the portable authentication apparatus 10 and the personal-identification-information transmitting unit 20 and changes the PC to perform the work.

As shown in Fig. 17, the user changes the work place in order of PC-A, PC-B, and PC-C. Even in such a case, the status management server 50 continually receives the status shown in Fig. 15 from the respective PCs and accumulates these pieces of information. Therefore, the work history of a user can be referred to by extracting the status relating to the specific user.

Fig. 18 is a schematic of an example of a location confirmation display relating to the extracted specified user. For example, it can be seen that the user "α" was working on the PC-A from 10:10 to 10:50, was away from the PC-A from 10:20 to 10:30, and is currently working on the PC-C.

According to the third embodiment, the status management server 50 that is connected to the Internet or the like, and collectively controls the status of the respective PCs is further provided. Accordingly, user's status can be accurately recognized (status processing) and the work place of the user can be confirmed (location confirmation process) by using the "local authentication" status between the portable authentication apparatus 10 and the personal-identification-information transmitting unit 20.

According to the third embodiment, an example in which the status management server 50 collectively controls the presence information of the user (a so-called client server method) has been explained; however, a configuration in which no central status management server 50 is provided (a so-called peer-to-peer method) can be used. In this case, the status processing or the location confirmation process is performed by exchanging the presence information of the user between the respective PCs.

According to the third embodiment, the status processing or the location confirmation process is performed by using the portable authentication apparatus 10 and the personal-identification-information transmitting unit 20 forming a pair. However, the configuration is not limited thereto, and a portable authentication apparatus 10 can obtain the position information of a user (a user carrying a personal-identification-information transmitting unit 20) near a specific information processing apparatus by communicating with a plurality of personal-identification-information transmitting units 20.

According to the third embodiment, an example in which the presence information of the user is obtained by using the respective PCs has been explained, however, the present invention is not limited thereto, and the presence information can be referred by using a mobile phone or a personal digital assistant (PDA) capable of communicating with the respective PCs or the status management server 50 via the network connected with the respective PCs.

Thus, in one aspect of the present invention, an authentication system includes a personal-identification-information transmitting unit that transmits personal identification information, and a portable authentication apparatus that performs an authentication process with the personal-identification-information transmitting unit based on the received personal identification information from the personal-identification-information transmitting unit and the personal identification information stored therein beforehand. Furthermore, the portable authentication apparatus comprises a control unit that controls provision of any one of predetermined data and software or both with respect to the information processing apparatus connected to the apparatus itself based on the result of the authentication process. Accordingly, an authentication system that can be easily carried by a user and can reduce the occurrence of information leakage even when the user is away from the PC can be provided.

Furthermore, in an embodiment of the present invention, the portable authentication apparatus includes a personal-environment storing unit that stores any one of data and software or both for constructing a personal environment for the user with respect to the information processing apparatus, and the control unit provides any one of data and software or both stored in the personal-environment storing unit to the information processing apparatus. Accordingly, even if a plurality of users uses the same computer, a work environment matched with each individual can be provided on the computer.

Moreover, in an embodiment of the present invention, the portable authentication apparatus includes an authentication-information storing unit that stores authentication information for identifying users. The control unit controls the provision of any one of data and software or both to the information processing apparatus, based on the result of authentication process performed by comparing the authentication information stored in the authentication-information storing unit with the authentication information received via the information processing apparatus, and the result of authentication process with the personal identification. Accordingly, the use of the portable authentication apparatus by an unauthorized user can be effectively prevented.

Furthermore, in an embodiment of the present invention, when the authentication process has been successful between the portable authentication apparatus and the personal-identification-information transmitting unit, however the subsequent authentication process has failed and the connection between the portable authentication apparatus and the information processing apparatus has been cut off, the portable authentication apparatus or the information processing apparatus turns into an alert state for issuing an alert. Accordingly, the portable authentication apparatus can be effectively prevented from being stolen.

Moreover, in an embodiment of the present invention, the portable authentication apparatus or the information processing apparatus maintains the alert state until the connection with the information processing apparatus is resumed, and when the connection with the information processing apparatus is resumed and the authentication process with the personal-identification-information transmitting unit has been successful, the portable authentication apparatus or the information processing apparatus turns into a non-alert state in which no alert is issued. Accordingly, since the alert state is maintained unless reconnection by an authorized user is performed, the portable authentication apparatus can be more effectively prevented from being stolen.

Furthermore, in an embodiment of the present invention, the personal-identification-information transmitting unit is configured to be an active transmitter that issues radio waves by itself by using a battery in the apparatus itself. Accordingly, the authentication process can be performed without forcing the user to bring the transmitter close to the portable authentication apparatus intentionally.

Moreover, in an embodiment of the present invention, the information processing apparatus is configured to be communicable with other information processing apparatuses, to determine the presence status of the user based on the authentication status between the personal-identification-information transmitting unit and the portable authentication apparatus, and to exchange the presence information based on the presence status with other information processing apparatuses. Accordingly, the presence information accurately reflecting the user's status whether he/she is present or away from the PC can be provided based on the authentication process.

Furthermore, in another aspect of the present invention, an authentication system includes a status management unit configured to be communicable with the information processing apparatus. The information processing apparatus determines the presence status of the user based on the authentication status between the personal-identification-information transmitting unit and the portable authentication apparatus, and transmits the presence information based on the presence status to the status management unit. The status management unit manages so that an apparatus capable of communicating with the status management unit can refer to the presence information of one or a plurality of information processing apparatuses. Accordingly, since the presence information accurately reflecting whether the user is present or away from the PC is managed collectively, not only the respective information processing apparatuses, however, also the apparatus capable of communicating with the status management unit can efficiently refer to the presence information.

Moreover, in an embodiment of the present invention, the presence information includes location information or history information of the presence status. Accordingly, tracking of user's work place and working hours and confirmation of user's work history can be efficiently performed.

Furthermore, in a further aspect of the present invention, a control method of the authentication system includes a step at which the personal-identification-information transmitting unit transmits the personal identification information, a step at which the portable authentication apparatus performs an authentication process with the personal-identification-information transmitting unit, based on the received personal identification information of the personal-identification-information transmitting unit and personal identification information stored therein beforehand, and a step at which the control unit in the portable authentication apparatus controls the provision of any one of predetermined data and software or both to the information processing apparatus. Accordingly, a control method of the authentication system, which can be easily carried by a user and can reduce the occurrence of information leakage even when the user is away from the PC, can be provided.

Moreover, in an embodiment of the method, the control method includes a step at which when the authentication process is successful between the portable authentication apparatus and the personal-identification-information transmitting unit, and the successful state of the authentication process continues, the information processing apparatus constructs a personal environment of the user by any one of the provided data and software or both, and a step at which when the authentication process fails between the portable authentication apparatus and the personal-identification-information transmitting unit, the information processing apparatus suspends the provision of the personal environment, and switches the personal environment to a public environment. Accordingly, a work environment matched with each individual can be provided regardless of the type of the computer connected to the portable authentication apparatus, and by returning the personal environment to the public environment appropriately, the system can be easily applied to computers used by many users.

Furthermore, in an embodiment, the control method includes a step at which when the authentication process is successful between the portable authentication apparatus and the personal-identification-information transmitting unit, however, the subsequent authentication process has failed and the connection between the portable authentication apparatus and the personal-identification-information transmitting unit has been cut off, the information processing apparatus instructs a imaging device to perform imaging operation. Accordingly, by taking a photograph of a person who steals the portable authentication apparatus, the theft prevention effect can be increased, and the thief can be specified.

Moreover, in another aspect of the present invention, a portable authentication apparatus includes a personal-identification-information storing unit that stores the personal identification information, a receiving unit that receives the personal identification information transmitted from the personal-identification-information transmitting unit, an authentication processing unit that performs an authentication process with the personal-identification-information transmitting unit, based on the personal identification information from the personal-identification-information transmitting unit received by the receiving unit and personal identification information stored in the personal-identification-information storing unit, and a control unit that controls the provision of any one of predetermined data and software or both to the information processing apparatus based on the result of the authentication process performed by the authentication processing unit. Accordingly, the portable authentication apparatus that can be easily carried by a user and can reduce the occurrence of information leakage even when the user is away from the PC can be provided.

Furthermore, in an embodiment, the portable authentication apparatus includes a retractable antenna for communicating with the personal-identification-information transmitting unit, an antenna joint that holds the antenna rotatably, and a connector for connecting the portable authentication apparatus to the information processing apparatus. Accordingly, a good radio reception condition can be easily maintained according to the relative position of the portable authentication apparatus and the personal-identification-information transmitting unit, and an authentication apparatus having excellent portability can be provided.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An authentication system for authenticating a user who operates an information processing apparatus, the authentication system comprising:
a personal-identification-information transmitting unit, arranged to transmit personal identification information; and
a portable authentication apparatus arranged to receive the personal identification information from the personal-identification-information transmitting unit, and to perform a first authentication process based on the personal identification information received from the personal-identification-information transmitting unit and personal identification information that is stored in the portable authentication apparatus in advance, wherein
the portable authentication apparatus includes a control unit arranged to control provision of at least one of predetermined data and software to the information processing apparatus, based on a result of the first authentication process.

2. The authentication system according to claim 1, wherein
the portable authentication apparatus further includes a personal-environment storing unit that stores at least one of data and software for constructing a personal environment of the user for the information processing apparatus, and
the control unit controls provision of the at least one of the data and the software stored in the personal-environment storing unit to the information processing apparatus, based on the result of the first authentication process.

3. The authentication system according to claim 1, wherein
the portable authentication apparatus further includes an authentication-information storing unit that stores authentication information for identifying the user, and
the control unit controls the provision of the at least one of the predetermined data and the software to the information processing apparatus, based on the result of the first authentication process and a result of a second authentication process that is performed by comparing the authentication information stored in the authentication-information storing unit with authentication information received via the information processing apparatus.

4. The authentication system according to claim 1, 2, or 3, wherein
when the first authentication process is successfully performed, and a subsequent first authentication process has failed and a connection between the portable authentication apparatus and the information processing apparatus is cut off, at least one of the portable authentication apparatus and the information processing apparatus turns into an alert state for issuing an alert.

5. The authentication system according to claim 4, wherein
the at least one of the portable authentication apparatus and the information processing apparatus, which turned into the alert state, maintains the alert state until the connection is recovered, and when the connection is recovered and the authentication process is successfully performed, returns to a non-alert state.

6. The authentication system according to any preceding claim, wherein
the personal-identification-information transmitting unit is an active transmitter that issues radio waves using a battery installed.

7. The authentication system according to any preceding claim, wherein
the personal-identification-information transmitting unit includes
a card holder that holds an identification card of the user;
an antenna provided at a top of the card holder; and
a battery provided at a back of the card holder.

8. An information processing system including means for authenticating a user who operates an information processing apparatus, based on personal identification information stored in a personal-identification-information transmitting unit and personal identification information stored in a portable authentication apparatus connected to the information processing apparatus, wherein
the information processing apparatus is configured to be communicable with other information processing apparatus, determine a presence status of the user based on an authentication status between the personal-identification-information transmitting unit and the portable authentication apparatus, and exchange presence information of the user based on the presence status with the other information processing apparatus.

9. The information processing system according to claim 8, wherein
the presence information includes either one of location information and history information of the presence status.

10. An information processing system including means for authenticating a user who operates an information processing apparatus, based on personal identification information stored in a personal-identification-information transmitting unit and personal identification information stored in a portable authentication apparatus connected to the information processing apparatus, the information processing system comprising:
a status management unit configured to be communicable with the information processing apparatus, wherein
the information processing apparatus is arranged to determine a presence status of the user based on an authentication status between the personal-identification-information transmitting unit and the portable authentication apparatus, and to transmit presence information of the user to the status management unit based on the presence status, and
the status management unit is arranged to manage the presence information in such a manner that an apparatus capable of communicating with the status management unit can refer to the presence information for at least one of a plurality of information processing apparatuses.

11. The information processing system according to claim 10, wherein
the presence information includes at least one of location information and history information of the presence status.

12. A control method for an authentication system for authenticating a user who operates an information processing apparatus, the control method comprising:
transmitting, by a personal-identification-information transmitting unit, personal identification information;
performing, by a portable authentication apparatus, an authentication process based on the personal identification information received from the personal-identification-information transmitting unit and personal identification information that is stored in the portable authentication apparatus in advance; and
controlling, by a control unit of the portable authentication apparatus, provision of at least one of predetermined data and software to the information processing apparatus, based on a result of the authentication process.

13. The control method according to claim 12, wherein
the control unit controls provision of at least one of data and software for constructing a personal environment of the user to the information processing apparatus.

14. The control method according to claim 13, further comprising:
when the authentication process is successfully performed, and while a success state of the authentication process continues, the information processing apparatus constructing the personal environment of the user with the provided at least one of the data and the software; and
when the authentication process fails,
the information processing apparatus suspending the provision of the personal environment; and
the information processing apparatus changing the personal environment to a public environment.

15. The control method according to claim 12, further comprising:
when the authentication process is successfully performed, and when a subsequent authentication process fails and the connection between the portable authentication apparatus and the personal-identification-information transmitting unit is cut off, the information processing apparatus instructing an imaging device to perform an imaging operation.

16. The control method according to any of claims 12 to 15, further comprising:
when the authentication process is successfully performed, and when a subsequent authentication process fails and the connection between the portable authentication apparatus and the personal-identification-information transmitting unit is cut off, at least one of the portable authentication apparatus and the information processing apparatus turning into an alert state for issuing an alert.

17. The control method according to claim 16, further comprising:
maintaining, by the at least one of the portable authentication apparatus and the information processing apparatus which have turned into the alert state, the alert state until the connection is recovered; and
when the connection is recovered and the authentication process is successfully performed, said at least one of the portable authentication apparatus and the information processing apparatus returning to a non-alert state.

18. The control method according to any of claims 12 to 17, further comprising:
the portable authentication apparatus transferring an authentication program to the information processing apparatus on a connection destination; and
having the authentication process performed using the authentication program transferred to the information processing apparatus.

19. The control method according to claim 14, further comprising:
when the authentication process fails, the portable authentication apparatus notifying a failure of the authentication process to the information processing apparatus; and
when a predetermined time elapses, the information processing apparatus suspending the provision of the personal environment.

20. A portable authentication apparatus for authenticating a user who operates an information processing apparatus on a connection destination, using a personal-identification-information transmitting unit that transmits personal identification information, the portable authentication apparatus comprising:
a personal-identification-information storing unit for storing first personal identification information;
a receiving unit for receiving second personal identification information from the personal-identification-information transmitting unit;
an authentication processing unit for performing an authentication process with the personal-identification-information transmitting unit, based on the first personal identification information and the second personal identification information; and
a control unit for controlling provision of at least one of predetermined data and software to the information processing apparatus based on a result of the authentication process.

21. The portable authentication apparatus according to claim 20, further comprising:
a retractable antenna for communicating with the personal-identification-information transmitting unit;
an antenna joint that holds the antenna in a rotatable manner; and
a connector for connecting the portable authentication apparatus to the information processing apparatus.
